# FASCICULE DE BREVET EUROPEEN

(11) **EP 4 185 396 B1**
(45) Date de publication et mention de la délivrance du brevet: **17.04.2024**
(21) Numéro de dépôt: 21748552.3
(22) Date de dépôt: 20.07.2021
(51) Int. Cl.: B01D 39/08, A41D 13/11, A62B 23/02, D03D 13/00, D03D 15/283, D04B 1/10, D04B 1/18, D04B 1/22

(54) **MASQUE BARRIÈRE RÉUTILISABLE ET PROCÉDÉ DE FABRICATION ASSOCIÉ**
WIEDERVERWENDBARE GESICHTSMASKE UND ZUGEHÖRIGES HERSTELLUNGSVERFAHREN
REUSABLE FACE MASK AND ASSOCIATED MANUFACTURING PROCESS

(30) Priorité: 22.07.2020 FR 2007692
(43) Date de publication de la demande: 31.05.2023
(73) Titulaire: Thuasne, 92300 Levallois Perret (FR)
(72) Inventeur: LABBE, Guillaume, 42350 La Talaudiere (FR); SCELLES, Hervé, 42170 Saint Just Saint Rambert (FR); MOURIER, Bruno, 42380 Aboen (FR); POYET, Mickaël, 42210 L'Hopital le Grand (FR)
(74) Mandataire: Lavoix
(86) Numéro de dépôt international: PCT/EP2021/070259
(87) Numéro de publication internationale: WO 2022/018079

(56) Documents cités:
- CN-A- 108 211 157
- CN-A- 109 463 819
- JP-B1- 6 147 452
- JP-U- 3 153 416
- KR-B1- 101 275 345
- KR-Y1- 200 386 879
- US-A1- 2011 202 018

## Description

La présente invention concerne un masque comprenant un corps principal, le corps principal comprenant deux parties d'extrémité et une portion centrale, la portion centrale s'étendant entre les parties d'extrémité selon une direction axiale, la portion centrale comprenant une zone filtrante adaptée pour couvrir la bouche et les narines d'un utilisateur.

L'invention concerne en outre un procédé de fabrication d'un tel masque.

Il existe actuellement deux principaux types de masques à usage médical, prévus pour couvrir la bouche et les narines d'un utilisateur.

D'une part, les masques chirurgicaux sont destinés à limiter la transmission d'agents infectieux depuis un porteur éventuel à une autre personne. Ce sont des dispositifs médicaux de classe 1, selon la directive CE. Ils doivent être conformes à la norme NF EN 15 14683+AC datant d'août 2019 et portant sur les masques à usage médical.

La majorité des masques chirurgicaux est réalisée sur la base d'un textile non tissé, qui est confectionné sous forme d'un rectangle avec trois plis. Lorsque le masque est porté, les trois plis s'ouvrent, pour adapter le masque au visage du porteur.

D'autre part, des dispositifs respiratoires, ou demi-masques filtrants contre les particules, sont conçus pour protéger une personne de son environnement. Ils sont des équipements de protection individuelle (EPI) et doivent être conformes à la norme NF EN 149+A1 datant de septembre 2009 et portant sur les appareils de protection respiratoire et demi-masques filtrants contre les particules.

Ils sont également réalisés dans des matériaux non tissés. Plusieurs formes existent, par exemple les formes dites de « bec de canard » et « coque ».

Cependant, ces deux types de masques présentent l'inconvénient majeur de devoir être remplacés toutes les 3 ou 4 heures et de ne pas être réutilisables.

Cela entraîne notamment un problème de traitement des déchets, plus particulièrement en cas d'utilisation importante de masques, par exemple dans des structures hospitalières ou en cas d'épidémie.

Une nouvelle catégorie de masques a été créée, sous la dénomination de masques barrière.

Il est attendu d'un tel masque une certaine capacité de filtration du matériau utilisé, une résistance respiratoire du matériau réduite et une forme adaptée pour couvrir le visage de l'utilisateur afin d'éviter au maximum les problèmes de fuite.

Il est, par exemple, attendu une efficacité de filtration bactérienne supérieure ou égale à 95%, plus particulièrement pour des particules de 3µm, et une pression différentielle strictement inférieure à 60 Pa au cm² telles que définies par AFNOR sous la référence AFNOR SPEC S76-001, version 1.10 du 27 avril 2020. Une telle pression différentielle correspond à un débit minimal admissible sous une dépression de 100 Pa de 96 L/m²/s.

Un tel masque est destiné à l'usage par des personnes saines ne présentant pas de symptôme clinique d'infection virale et n'étant a priori pas en contact avec des personnes présentant de tels symptômes.

Son port permet de constituer une barrière de protection contre une éventuelle pénétration ou rétention virale dans la zone de la bouche et du nez de son utilisateur. Il permet, en outre, de protéger ladite zone de tout contact avec les mains.

Ce masque permet notamment de protéger l'ensemble d'un groupe portant un tel type de masque barrière.

Des masques sont notamment réalisés artisanalement dans le cadre de la protection d'un groupe.

Cependant, ces masques présentent des performances de filtration très variables, pouvant se révéler peu satisfaisantes.

Le document CN 108211157 A divulgue un masque comprenant un corps principal, le corps principal est un tricot et présente une forme tubulaire selon la direction axiale.

Un but de l'invention est de proposer un masque aisé à réaliser, réutilisable et prévu pour diminuer le risque de transmission générale d'un agent infectieux et offrant une performance de filtration satisfaisante.

A cet effet, l'invention a pour objet un masque du type précité, dans lequel le corps principal est un tricot et présente une forme tubulaire selon la direction axiale et s'étendant entre deux extrémités selon la direction axiale, chaque partie d'extrémité définissant une extrémité respective de la forme tubulaire, chaque partie d'extrémité présentant une fente s'étendant sur une portion d'une circonférence de la forme tubulaire, chaque partie d'extrémité définissant une bride entre l'extrémité et la fente correspondantes, chaque bride étant adaptée pour entourer une oreille correspondante de l'utilisateur, et
dans lequel le tricot dans la zone filtrante est un tricot d'au moins un fil multifilamentaire synthétique en rangs, chaque fil multifilamentaire synthétique comprenant au moins sept filaments dans la zone filtrante, le tricot dans la zone filtrante présentant une longueur de fil absorbée inférieure ou égale à 0,35 centimètre par aiguille, l'au moins un fil multifilamentaire synthétique formant, pour chaque rang, une maille au moins une colonne sur deux dans la zone filtrante.

La zone filtrante permet de filtrer l'air entre la zone de la bouche et du nez d'un porteur du masque et l'extérieur, de sorte à diminuer le risque d'un agent infectieux. En outre, l'utilisation de fils multifilamentaires synthétiques, chaque fil comprenant au moins sept filaments, permet le lavage du masque à une température assez élevée pour neutraliser un agent infectieux, par exemple 60°C, en maintenant les capacités de filtration de la zone filtrante. En outre, les brides tricotées directement ont moins de risque de se dégrader à ladite température que des brides réalisées dans certains matières élastiques telles du caoutchouc. Le masque présente alors l'avantage d'être réutilisable. Cela permet alors de réduire la production de déchets liés à l'utilisation de masques à usage unique.

En outre, la forme tubulaire du masque et la réalisation des brides par la présence d'une fente dans les parties d'extrémité permet de fabriquer avec peu d'étapes un masque avec une zone filtrante et adapté à être porté par un utilisateur.

Le masque peut en outre présenter une ou plusieurs des caractéristiques ci-dessous, considérées individuellement ou selon toutes les combinaisons techniquement possibles :
- dans la zone filtrante, pour chaque colonne d'un rang dans lequel aucun fil multifilamentaire synthétique ne forme de maille, alors au moins un de l'au moins un fil multifilamentaire synthétique forme une maille sur les colonnes adjacentes dans le rang ;
- la zone filtrante est adaptée pour former deux épaisseurs devant la bouche et les narines de l'utilisateur lorsque chaque bride entoure l'oreille correspondante d'un utilisateur ;
- la fente de chaque partie d'extrémité s'étend sur une moitié de la circonférence de la forme tubulaire ;
- les fentes des parties d'extrémité sont symétriques l'une par rapport à l'autre par rapport à un plan médian du corps principal ;
- chacune des fentes est réalisée pendant le tricotage du corps principal, plus particulièrement par mise en attente d'aiguilles correspondantes ;
- la zone filtrante présente un motif de structure de tricot sur l'ensemble de la zone filtrante, le motif de structure étant un des motifs suivants :
   en 1&1 alterné ou micro 1&1 alterné,
   un motif dans lequel un même rang donné est répété, ledit rang donné consistant en une alternance de maille et de charge, et
   un jersey uni ;
- le masque comprend une barrette nasale agencée dans la portion centrale du corps principal ; et/ou
- le masque est constitué du corps principal ou est constitué du corps principal et une barrette nasale.

L'invention concerne en outre un procédé de fabrication d'un masque tel que défini précédemment, comprenant une étape de tricotage du corps principal directement en forme, le corps principal présentant une forme tubulaire, une fente étant formée pendant l'étape de tricotage dans chaque partie d'extrémité de sorte que chaque partie d'extrémité définit une bride entre l'extrémité et la fente correspondantes, chaque bride étant adaptée pour entourer une oreille correspondante de l'utilisateur, le tricot dans la zone filtrante étant un tricot d'au moins un fil multifilamentaire synthétique en rangs, chaque fil multifilamentaire synthétique de la zone filtrante comprenant au moins sept filaments, le tricot dans la zone filtrante présentant une longueur de fil absorbée inférieure ou égale à 0,35 centimètre par aiguille, l'au moins un fil multifilamentaire synthétique formant, sur chaque rang, une maille au moins une colonne sur deux dans la zone filtrante.

D'autres caractéristiques et avantages de l'invention apparaîtront à la lecture de la description qui suit de modes de réalisation de l'invention, donnée à titre d'exemple uniquement et en référence aux dessins dans lesquels :
[Fig 1] la figure 1 est une vue en perspective de côté d'un masque selon un mode de réalisation de l'invention, porté par un utilisateur,
[Fig 2] la figure 2 est une vue schématique en perspective d'une moitié du masque de la figure 1,
[Fig 3] la figure 3 est une représentation schématique d'un exemple de motif de structure de tricot d'une première zone d'un masque selon l'invention,
[Fig 4] la figure 4 est une représentation schématique d'un exemple de motif de structure de tricot d'une deuxième zone d'un masque selon l'invention,
[Fig 5] la figure 5 est une représentation schématique d'un exemple de motif de structure de tricot d'une troisième zone d'un masque selon l'invention,

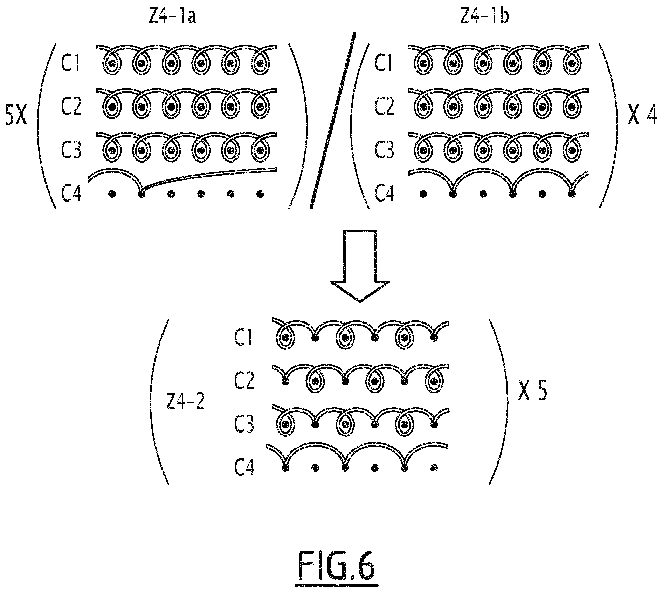

[Fig 6] la figure 6 est une représentation schématique d'un exemple de motif de structure de tricot d'une quatrième zone d'un masque selon l'invention,
[Fig 7] la figure 7 est une représentation schématique d'un premier exemple de motif de structure de tricot d'une zone filtrante d'un masque selon l'invention,
[Fig 8] la figure 8 est une représentation schématique d'un exemple de motif de structure de tricot d'une zone adaptée pour recevoir une barrette nasale d'un masque selon l'invention,
[Fig 9] la figure 9 est une représentation schématique d'un deuxième exemple de motif de structure de tricot d'une zone filtrante d'un masque selon l'invention, et
[Fig 10] la figure 10 est une représentation schématique d'un troisième exemple de motif de structure de tricot d'une zone filtrante d'un masque selon l'invention.

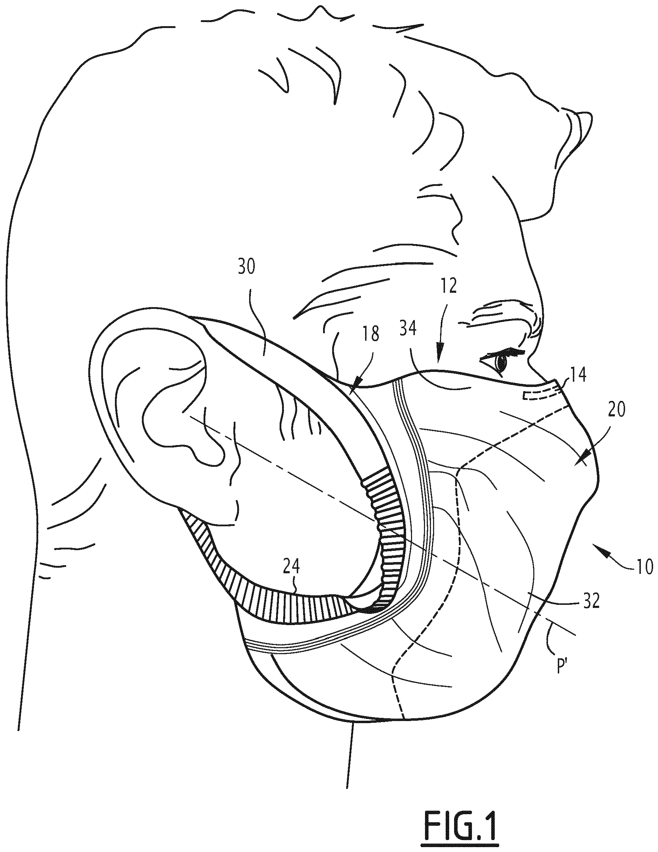

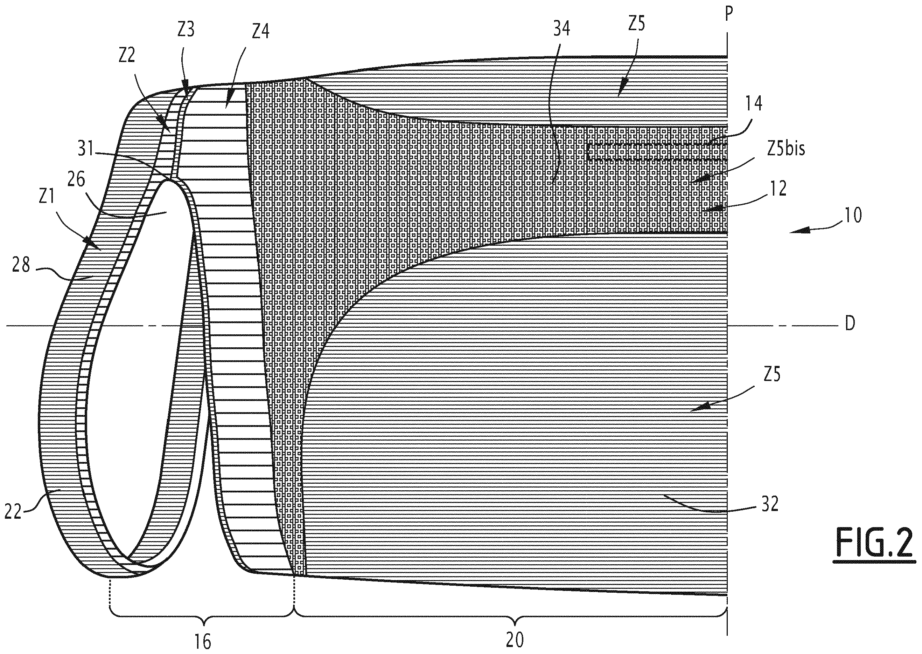

Un exemple de masque 10 selon l'invention est représenté sur les figures 1 et 2.

Le masque 10 est destiné à être porté par un utilisateur pour couvrir la zone de la bouche et du nez, plus particulièrement des narines, de manière à filtrer l'air entrant et/ou sortant de la bouche et du nez de l'utilisateur par rapport à son environnement extérieur.

Le masque 10 comprend un corps principal 12 et éventuellement une barrette nasale 14.

Plus particulièrement, le masque 10 est constitué du corps principal 12 et éventuellement de la barrette nasale 14.

Le corps principal 12 présente, dans l'exemple représenté, un plan médian P. Il présente, par exemple, une symétrie par rapport au plan médian P.

Le plan médian P est destiné à s'étendre dans le plan sagittal médian du porteur du masque.

Le corps principal 12 comprend, plus particulièrement est constitué de, deux parties d'extrémité 16, 18 et une portion centrale 20.

La portion centrale 20 s'étend entre les parties d'extrémité 16, 18 selon une direction axiale.

Le corps principal 12 est un tricot.

Dans l'exemple décrit, le corps principal 12 est tricoté sur un métier circulaire directement en forme, par exemple un métier mono-cylindre.

Le cylindre comprend un nombre donné d'aiguilles, par exemple 360 aiguilles.

Chaque aiguille du métier à tricoter correspond à une colonne du tricot.

Le cylindre présente ici un diamètre 4" ¾ ou 4,75 pouces anglais.

Le cylindre présente une jauge supérieure ou égale à 14, plus particulièrement égale à 24. La jauge correspond au nombre d'aiguilles dans la direction circonférentielle sur la distance d'un pouce anglais, soit 2,54 centimètres.

Cela permet notamment d'obtenir des mailles très serrées, particulièrement adaptées pour la filtration d'agents infectieux.

Le corps principal 12, est, par exemple, constitué de fils synthétiques tricotés ensemble, plus particulièrement en polyester, en polyamide, en élasthanne guipé avec du polyamide et/ou en polypropylène.

Les fils ont un taux de reprise en humidité relativement faible.

Le corps principal 12 est souple.

Le corps principal 12 présente une forme tubulaire autour d'un axe s'étendant selon la direction axiale D.

Le corps principal 12 est un tricot circulaire en rangs, chaque rang correspondant à une circonférence du tube.

Le tricot est, par exemple, un tricot trame.

Le corps principal 12 s'étend entre deux extrémités 22, 24 selon la direction axiale.

Le plan médian P est perpendiculaire à la direction axiale D.

Le plan médian P s'étend à mi-distance entre les deux extrémités 22, 24.

Le corps principal 12 présente, en outre, ici une symétrie par rapport à un plan transversal P', le plan transversal P' étant perpendiculaire au plan médian P.

Le plan transversal P' comprend l'axe de la forme tubulaire.

Chaque partie d'extrémité 16, 18 définit une extrémité respective 22, 24 de la forme tubulaire.

Chaque partie d'extrémité 16, 18 présente une fente 26 circonférentielle s'étendant sur une portion, ici une moitié, d'une circonférence de la forme tubulaire.

Chaque partie d'extrémité 16, 18 définit une bride 28, 30 entre l'extrémité 22, 24 et la fente 26 correspondantes, chaque bride 28, 30 étant adaptée pour entourer une oreille correspondante de l'utilisateur.

Les fentes 26 des parties d'extrémité 16, 18 sont symétriques l'une par rapport à l'autre par rapport au plan médian P.

Les fentes 26 s'étendent en regard l'une de l'autre par rapport à la direction axiale D.

Chaque fente 26 s'étend entre deux extrémités 31 selon la circonférence.

Chacune des fentes 26 est réalisée pendant le tricotage du corps principal 12, plus particulièrement par mise en attente d'aiguilles correspondantes.

Un exemple des différentes structures de tricot pour chacune des parties d'extrémité 16, 18 du masque sont décrites à partir de l'extrémité correspondante 22, 24 vers le plan médian P, le masque étant symétrique par rapport au plan médian P.

Le métier à tricoter comprend ici quatre chutes de tricotages C1, C2, C3, C4.

On définit, pour la suite, trois exemples de natures de fil différentes.

Un fil d'une première nature est en polyamide ou en polyester ou en polypropylène, plus particulièrement ici en polyamide, présente un titre compris entre 13 et 110 decitex, plus particulièrement égal à 44 dtex, et comprend au moins sept, par exemple au moins vingt-trois, filaments, plus particulièrement comprend deux bouts, chaque bout comprenant 34 filaments.

Un fil d'une deuxième nature est en élasthanne guipé, plus particulièrement ici en élasthanne double guipé avec deux fils en polyamide ou en polyester ou en polypropylène, plus particulièrement ici en polyamide. L'âme en élasthanne présente un titre compris entre 17 et 78 decitex, plus particulièrement égal à 44 dtex. Chaque fil de couverture présente un titre compris entre 13 et 110 decitex, plus particulièrement égal à 44 dtex et comprend au moins sept, plus particulièrement au moins vingt-trois, filaments, plus particulièrement comprend un bout comprenant 34 filaments.

Un fil d'une troisième nature est en élasthanne guipé, plus particulièrement ici en élasthanne double guipé avec deux fils en polyamide ou en polyester ou en polypropylène, plus particulièrement ici en polyamide. L'âme en élasthanne présente un titre compris entre 17 et 940 decitex, plus particulièrement égal à 285 dtex. Chaque fil de couverture présente un titre compris entre 13 et 110 decitex, plus particulièrement égal à 22 dtex et comprend un bout comprenant sept filaments.

Chaque partie d'extrémité 16, 18 est ici formée de quatre zones de tricot : une zone de démarrage Z1, une zone de préparation au décrochage Z2, une zone de remaillage Z3 et une zone de transition Z4.

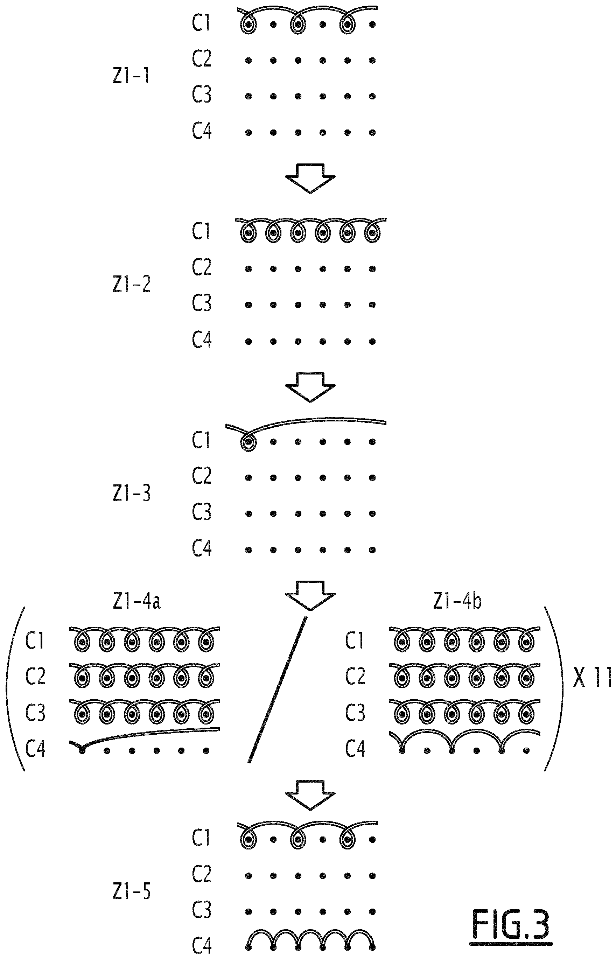

Un exemple de structure de tricot de la zone de démarrage Z1 est représenté sur la figure 3.

Le premier rang Z1-1 correspond à un tricot à base jersey consistant en une maille une colonne sur deux, la maille étant, par exemple, réalisée sur les aiguilles ou colonnes impaires.

Seule la première chute C1 est ici utilisée.

Le deuxième rang Z1-2 correspond à un tricot jersey uni, c'est-à-dire un tricot à base jersey consistant entièrement en rangs d'uni (jersey) présentant des mailles sur chaque colonne.

Seule la première chute C1 est ici utilisée.

Le troisième rang Z1-3 correspond à un tricot consistant en une maille toutes les six colonnes. Ladite maille est, par exemple, agencé sur une aiguille impaire.

Seule la première chute C1 est ici utilisée.

Deux fils sont, par exemple, tricotés en même temps sur chacun des premier, deuxième et troisième rangs. Un premier de chacun des deux fils est, par exemple, un fil de la première nature, et le deuxième de chacun des deux fils est, par exemple, un fil de la deuxième nature.

Puis, sur les quarante-quatre rangs suivants, correspondant à onze tours du cylindre sur un métier comprenant quatre chutes utilisées, le tricot consistent en deux motifs de structure Z1-4a, Z1-4b.

Sur une première portion, plus particulièrement une moitié, du cylindre, un premier des deux motifs de structure se répète, et sur la portion complémentaire de la première portion, le deuxième des deux motifs de structure se répète.

Sur les colonnes correspondant à la portion de la circonférence au niveau de la fente, ici correspondant à une première moitié des aiguilles, le motif Z1-4b comprend trois rangs de tricot jersey uni et un rang consistant en une charge en une colonne sur deux, par exemple sur les aiguilles ou colonnes impaires.

Sur les colonnes ne correspondant pas à la portion de la circonférence au niveau de la fente, ici correspondant à la moitié complémentaire des aiguilles, le motif Z1-4a comprend trois rangs de tricot jersey uni et un rang consistant en une charge en une colonne sur six, plus particulièrement sur la même aiguille ou colonne que la maille en Z1-3.

Les trois premiers rangs des motifs Z1-4a, Z1-4b sont, par exemple, tricotés avec un fil de la première nature.

Le quatrième rang des motifs Z1-4a, Z1-4b est, par exemple, tricoté avec un fil de la troisième nature.

Puis, le dernier rang de la zone de démarrage Z1 correspond à un tricot à base jersey consistant en une maille une colonne sur deux, la maille étant, par exemple, réalisée sur les aiguilles ou colonnes impaires.

Deux fils sont, par exemple, tricotés en même temps sur le dernier rang. Les deux fils sont, par exemple, des fils de la première nature.

Seule la première chute C1 est ici utilisée avec du fil pour créer un rang.

Pendant la réalisation du dernier rang de la zone de démarrage Z1, les aiguilles sont montées en position intermédiaire pour préparer à la zone de préparation au décrochage Z2. Cela est réalisé sans fil, par déplacement des aiguilles pour monter une charge sur chacune des aiguilles comme représenté sur la quatrième chute C4 de la structure Z1-5.

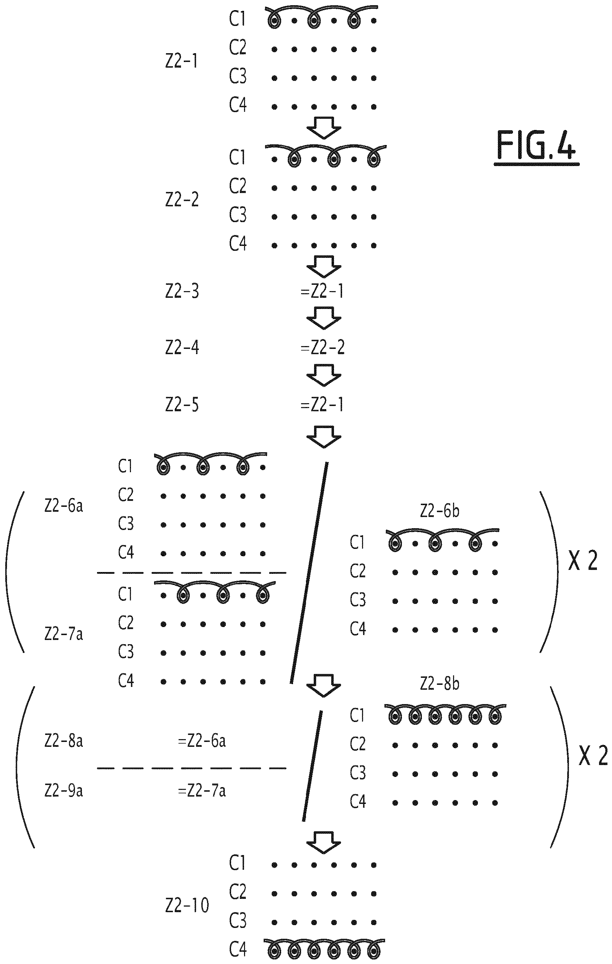

Un exemple de structure de tricot de la zone de préparation au décrochage Z2 est représenté sur la figure 4.

Chacun des rangs de la zone de préparation au décrochage Z2 est réalisé par un tour de cylindre, les fils étant uniquement tricotés sur la première chute C1.

Le premier rang Z2-1 correspond à un tricot à base jersey consistant en une maille une colonne sur deux, les mailles étant, par exemple, réalisées sur les aiguilles ou colonnes impaires.

Le deuxième rang Z2-2 correspond à un tricot à base jersey consistant en une maille une colonne sur deux, les mailles étant décalées par rapport au premier rang Z2-1, les mailles étant, par exemple, réalisées sur les aiguilles ou colonnes paires.

Le troisième rang Z2-3 est ici identique au premier rang Z2-1.

Le quatrième rang Z2-4 est ici identique au deuxième rang Z2-2.

Le cinquième rang Z2-5 est ici identique au premier rang Z2-1.

Le sixième rang Z2-6a/Z2-6b est ici identique au premier rang Z2-1.

Le septième rang Z2-7a/Z2-6a consiste :
- pour la portion en dehors de la circonférence correspondant à la fente, en une portion de rang identique au deuxième rang Z2-2, et
- pour la portion de la circonférence correspondant à la fente, en une portion de rang identique au premier rang Z2-1.

Le huitième rang est ici identique au sixième rang Z2-6a/Z2-6b.

Le neuvième rang est ici identique au septième rang Z2-7a/Z2-6a.

Le dixième rang Z2-8a/Z2-8b consiste :
- pour la portion en dehors de la circonférence correspondant à la fente, en une portion de rang identique au premier rang Z2-1, et
- pour la portion de la circonférence correspondant à la fente, en une portion de rang de tricot jersey uni.

Le onzième rang Z2-9a/Z2-8b consiste :
- pour la portion en dehors de la circonférence correspondant à la fente, en une portion de rang identique au deuxième rang Z2-2, et
- pour la portion de la circonférence correspondant à la fente, en une portion de rang de tricot jersey uni.

Le douzième rang est ici identique au dixième rang Z2-8a/Z2-8b.

Le treizième rang est ici identique au onzième rang Z2-9a/Z2-8b.

Pour chacun des rangs de la zone de préparation au décrochage Z2, trois fils sont, par exemple, tricotés en même temps. Deux des trois fils sont, par exemple, un fil de la première nature, et le troisième des trois fils est, par exemple, un fil de la deuxième nature.

Puis, les aiguilles sont montées pour préparer à la zone de remaillage Z3. Cela est réalisé sans fil, par déplacement des aiguilles pour monter une maille comme représenté sur la quatrième chute C4 de la structure Z2-10.

La fente est ici formée par un décrochage sur la portion de la circonférence correspondante entre la zone de préparation au décrochage Z2 et la zone de remaillage Z3.

Les aiguilles correspondant à ladite portion de la circonférence, c'est-à-dire correspondant aux colonnes du tricot à travers lesquelles s'étendent la fente, sont mises en attente pendant le décrochage.

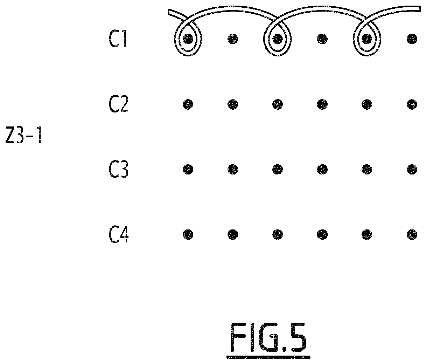

La zone de remaillage Z3 consiste ici en un rang Z3-1 en un tricot à base jersey consistant en une maille une colonne sur deux, les mailles étant, par exemple, réalisées sur les aiguilles ou colonnes impaires, comme représenté sur la figure 5.

Pour le rang de la zone de remaillage, deux fils sont, par exemple, tricotés en même temps. Un premier des deux fils est, par exemple, un fil de la première nature, et le deuxième des deux fils est, par exemple, un fil de la deuxième nature.

La zone de transition Z4 comprend, sur une pluralité de premiers rangs, une partie tricotée uniquement sur les colonnes qui ne sont pas traversées par la fente, les aiguilles étant mises en attente sur la portion de la circonférence correspondant à la fente.

Plus particulièrement, les quatre premiers rangs présentent, uniquement sur les colonnes qui ne sont pas traversées par la fente, un motif Z4-1a.

Les trois premiers rangs de la zone de transition consistent en une portion de rang de tricot jersey uni, uniquement sur la portion en dehors de la circonférence correspondance à la fente. Puis, le quatrième rang de la zone de transition consiste en une charge une colonne sur six, uniquement sur la portion en dehors de la circonférence correspondance à la fente. Les charges sont ici formées pour une aiguille paire sur trois.

Les charges sont ici décalées d'une colonne par rapport aux charges du motif Z1-4a.

Puis, les seize rangs suivants, correspondant à quatre tours du cylindre sur un métier comprenant quatre chutes utilisées, le tricot consistent en deux motifs de structure Z4-1a, Z4-1b se répétant.

Sur les colonnes qui ne sont pas traversées par la fente, le motif Z4-1a se répète.

Sur les colonnes qui sont traversées par la fente, c'est-à-dire correspondant à la portion de la circonférence de la fente, le motif Z4-1b comprend trois rangs de tricot jersey uni et un rang consistant en une charge en une colonne sur deux. Les charges sont ici formées sur les aiguilles paires.

Les charges sont ici décalées par rapport aux charges du motif Z1-4b.

Puis, les vingt rangs suivants, correspondant à cinq tours du cylindre sur un métier comprenant quatre chutes utilisées, le tricot consistent en un motif de structure Z4-2.

Le premier rang du motif de structure Z4-2 consiste en une alternance maille-charge, plus particulièrement consistant en une maille sur chaque colonne ou aiguille impaire et une charge sur chaque colonne ou aiguille paire.

Le deuxième rang du motif de structure Z4-2 consiste en une alternance maille-charge décalée par rapport au premier rang du motif de structure Z4-2, c'est-à-dire ici une maille sur chaque colonne ou aiguille paire et une charge sur chaque colonne ou aiguille impaire.

Le troisième rang du motif de structure Z4-2 est identique au premier rang du motif de structure Z4-2.

Le quatrième rang du motif de structure Z4-2 consiste en une charge sur chaque colonne ou aiguille impaire uniquement.

Pour chacun des rangs correspondant aux trois premières chutes C1, C2, C3 de la zone de transition Z4, deux fils sont, par exemple, tricotés en même temps. Les fils sont, par exemple, un fil de la première nature.

Pour chacun des rangs correspondant à la quatrième chute C4 de la zone de transition Z4, un fil est, par exemple, tricoté. Le fil est, par exemple, un fil de la troisième nature.

La portion centrale 20 présente une forme tubulaire dépourvue d'ouverture radiale, c'est-à-dire dans le tricot formant la portion centrale 20.

La portion centrale 20 est adaptée pour former deux épaisseurs devant la bouche et les narines de l'utilisateur lorsque chaque bride 28, 30 entoure l'oreille correspondante d'un utilisateur.

Plus particulièrement, la portion centrale 20 du corps principal 12 est adaptée pour se plier de sorte à former deux couches de tricot l'une sur l'autre.

Lorsque le masque est porté, la portion centrale 20 se plie en un bord inférieur et un bord supérieur, chacun des bords inférieur et supérieur reliant, selon la direction axiale D, une extrémité 31 d'une première des fentes 26 à une extrémité correspondante de la deuxième des fentes.

La portion centrale 20 comprend une zone filtrante 32 adaptée pour couvrir la bouche et les narines d'un utilisateur.

La portion centrale 20 comprend en outre une zone secondaire 34.

La portion centrale 20 est constituée de la zone filtrante 32 et de la zone secondaire 34.

La zone filtrante 32 est destinée à s'étendre devant la bouche et les narines de l'utilisateur lorsque le masque 10 est porté.

Dans l'exemple représenté, chaque couche de la portion centrale 20 comprend une portion de la zone filtrante 32 dans une zone centrale, la zone filtrante étant constituée desdites portions. Chaque portion de la zone filtrante 32 a, par exemple, une forme convexe centrée dans la couche correspondante.

La zone secondaire 34 s'étend ici au moins entre la zone filtrante 32 et le bord supérieur.

Dans l'exemple représenté, la zone secondaire 34 entoure l'ensemble de la zone filtrante 32.

La zone secondaire 34 est, par exemple, configurée pour recevoir la barrette nasale 14 prévue pour s'étendre transversalement sur le nez d'un porteur du masque.

La barrette nasale 14 est ainsi agencée dans la portion centrale 20 du corps principal 12.

La barrette nasale 14 est malléable de manière à former et maintenir une forme souhaitée.

Cela permet notamment de donner au masque une forme donnée au niveau de sa partie supérieure, de manière à se conformer au relief formé par le nez, et ainsi limiter le risque de fuite autour de la zone filtrante 32.

La barrette nasale 14 est, par exemple, métallique.

Dans l'exemple représenté, la zone filtrante 32 est ici constituée d'un unique motif de structure de tricot Z5 du corps principal 12 et la zone secondaire 34 d'un unique motif de structure de tricot Z5bis.

Alternativement, la zone secondaire 34 s'étend uniquement dans une partie supérieure, c'est-à-dire définissant le bord supérieur, de chaque couche de la portion centrale 20.

Alternativement, la zone filtrante 32 s'étend sur l'ensemble de la portion centrale.

La zone filtrante 32 est adaptée pour former deux épaisseurs devant la bouche et les narines de l'utilisateur lorsque chaque bride 28, 30 entoure l'oreille correspondante d'un utilisateur.

Le tricot dans la zone filtrante 32, plus particulièrement ici sur l'ensemble de la portion centrale 20, est un tricot d'au moins un fil multifilamentaire synthétique, chaque fil multifilamentaire synthétique comprenant au moins sept, plus particulièrement au moins vingt-trois, filaments.

Dans la zone filtrante 32, plus particulièrement ici sur l'ensemble de la portion centrale 20, deux fils sont tricotés ensemble sur chaque rang.

Les deux fils sont, par exemple, des fils de la première nature.

Chaque fil dans la zone filtrante 32, plus particulièrement ici sur l'ensemble de la portion centrale 20, est ici un fil de la première nature.

Chaque fil dans la zone filtrante 32, plus particulièrement ici sur l'ensemble de la portion centrale 20, comprend, par exemple, deux bouts, chaque bout comprenant 34 filaments.

L'au moins un fil multifilamentaire synthétique dans la zone filtrante 32, plus particulièrement ici sur l'ensemble de la portion centrale 20, présente un titre compris entre 13 et 110 decitex, plus particulièrement égal à 44 dtex.

L'au moins un fil multifilamentaire synthétique dans la zone filtrante 32, plus particulièrement ici sur l'ensemble de la portion centrale 20, est, par exemple, en polyamide, en polyester et/ou en polypropylène.

Le relativement faible taux de reprise en humidité permet notamment de limiter un éventuel risque de développement de bactéries, lié à une humidité résiduelle.

L'ensemble des fils de la zone filtrante 32, plus particulièrement ici de l'ensemble de la portion centrale 20, sont identiques entre eux.

Le tricot dans la zone filtrante 32, plus particulièrement ici sur l'ensemble de la portion centrale 20, présente une longueur de fil absorbée inférieure ou égale à 0,35 centimètre par aiguille.

Le tricot dans la zone filtrante 32, plus particulièrement ici sur l'ensemble de la portion centrale 20, présente en outre une longueur de fil absorbée inférieure ou égale à 150 centimètres par tour de cylindre, plus particulièrement comprise entre 84 cm et 131 cm, plus particulièrement égale à 126 cm, plus particulièrement pour un métier circulaire comprenant 360 aiguilles, plus particulièrement ici une jauge 24 et un diamètre de métier égal à 4" ¾.

Chacun des fils du tricot dans la zone filtrante 32, plus particulièrement ici sur l'ensemble de la portion centrale 20, présente une élasticité strictement inférieure à 20%.

Cela permet notamment de limiter la déformation de la structure de tricot dans la zone filtrante 32, par exemple pendant le port du masque, et donc de la taille des pores formés par le tricot. Cela permet de maintenir les propriétés de filtration du masque.

Dans la zone filtrante 32, plus particulièrement ici sur l'ensemble de la portion centrale 20, le ou chaque fil multifilamentaire synthétique forme, sur chaque rang, une maille au moins une colonne sur deux,

Plus particulièrement, pour chaque colonne d'un rang dans lequel aucun fil multifilamentaire synthétique ne forme de maille, alors au moins un fil multifilamentaire synthétique forme une maille sur les colonnes adjacentes dans le rang.

Cela permet notamment d'avoir des capacités de filtration satisfaisantes.

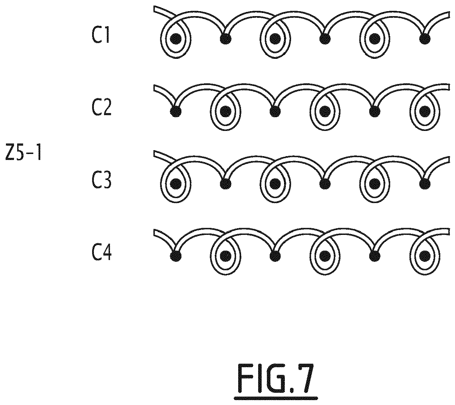

Dans l'exemple représenté à la figure 7, la zone filtrante 32 présente un motif de structure de tricot en 1&1 alterné ou micro 1&1 alterné, c'est-à-dire un tricot à base jersey consistant dans chaque répétition du motif en un premier rang en alternant maille-charge, avec par exemple les charges sur les aiguilles paires, et en un deuxième rang en alternant maille-charge décalée par rapport au premier rang, par exemple avec les charges sur les aiguilles impaires.

Ledit motif est, par exemple, présent sur l'ensemble de la zone filtrante 32.

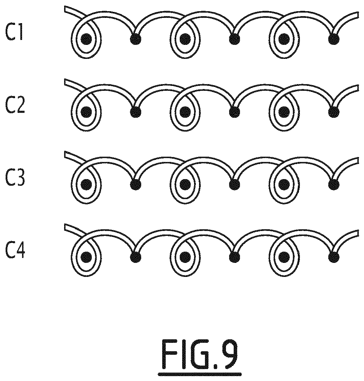

Alternativement, comme représenté sur la figure 9, la zone filtrante 32 présente un motif de structure de tricot dans lequel le même rang est répété, ledit rang consistant en une alternance de maille et de charge, par exemple avec les charges sur les aiguilles paires. Ledit motif est, par exemple, présent sur l'ensemble de la zone filtrante 32.

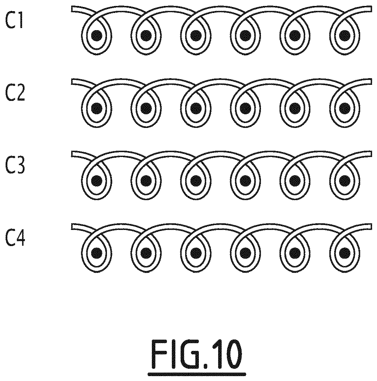

Alternativement, comme représenté sur la figure 10, la zone filtrante 32 est un tricot jersey uni, c'est-à-dire un tricot à base jersey consistant entièrement en rangées d'uni (jersey).

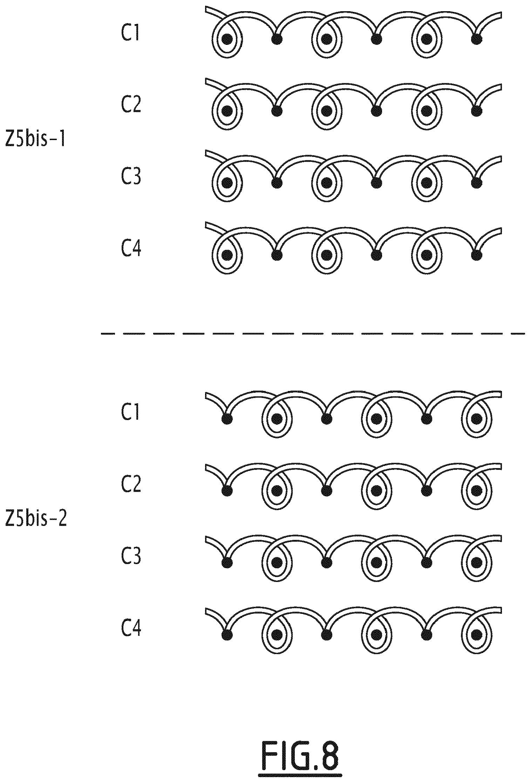

La zone secondaire 34 présente un motif de structure de tricot comme représenté à la figure 8.

Le motif de structure de tricot correspond ici à deux tours de cylindre avec les quatre chutes utilisées, soit huit rangs.

Pour le premier tour, le motif de structure de tricot correspond au même rang répété par l'ensemble des chutes, ledit rang consistant en une alternance de maille et de charge, par exemple avec les charges sur les aiguilles paires.

Pour le deuxième tour, le motif de structure de tricot correspond au même rang répété par l'ensemble des chutes, ledit rang consistant en une alternance de maille et de charge décalée par rapport au premier tour, par exemple avec les charges sur les aiguilles impaires.

Un procédé de fabrication d'un masque tel que décrit précédemment va maintenant être décrit.

La fabrication du masque 10 comprend une étape de tricotage du corps principal 12 et le cas échéant de fourniture d'une barrette nasale 14 sur le corps principal 12.

Comme décrit précédemment, le corps principal est tricoté sur un métier circulaire directement en forme, plus particulièrement un métier mono-cylindre.

Le cylindre comprend un nombre donné d'aiguilles, par exemple 360 aiguilles.

Le cylindre présente ici un diamètre 4" ¾ ou 4,75 pouces anglais.

Le cylindre présente une jauge supérieure ou égale à 14, plus particulièrement égale à 24. La jauge correspond au nombre d'aiguilles dans la direction circonférentielle sur la distance d'un pouce anglais, soit 2.54 centimètres.

Cela permet notamment d'obtenir des mailles très serrées, particulièrement adaptées pour la filtration d'agents infectieux.

Le métier à tricoter comprend ici quatre chutes de tricotages C1, C2, C3 et C4.

Le masque 10 est tricoté depuis une première extrémité 22 jusqu'à une deuxième extrémité 24 selon les structures de tricot décrites précédemment.

Plus particulièrement, une première partie d'extrémité 16 est d'abord tricotée de la zone de démarrage Z1 à la zone de transition Z4 comme décrit précédemment.

Puis, la portion centrale 20 est tricotée.

La portion centrale 20 correspond, par exemple, à 112 tours de cylindre.

Pour chaque tour de cylindrique, les quatre chutes C1, C2, C3, C4 sont utilisées avec alimentation en fil pour la formation de la portion centrale 20, de sorte que chaque tour de cylindre crée quatre rangs de la portion centrale 20.

Pour chaque rang, pour les colonnes correspondant à la zone filtrante 32, l'un des motifs décrits en regard des figures 7, 9 et 10 est, par exemple, tricoté ; alors que pour les colonnes correspondant à la zone secondaire 34, le motif décrit en regard de la figure 8 est, par exemple, tricoté.

Par exemple, dans la partie de la portion centrale 20 adjacente d'une zone de transition Z4, la zone secondaire 34 s'étend sur toute la circonférence du corps tubulaire.

Au niveau du plan médian P, la zone secondaire 34 comprend un nombre donné, par exemple vingt, de colonnes de part et d'autre du bord supérieur.

Dans l'exemple représenté, la zone secondaire 34 comprend, en outre, le même nombre de colonnes de part et d'autre du bord inférieur.

Le nombre de colonnes correspondant à la zone filtrante 32 pour chaque rang augmente en allant de la zone de transition Z4 et le plan médian P.

Alternativement, la zone filtrante 32 s'étend sur l'ensemble de la portion centrale 20.

Enfin, la deuxième partie d'extrémité 18 est tricotée de la zone de transition Z4 à la zone de démarrage Z1 dans le sens inverse de ce qui a été décrit précédemment.

Dans un mode de réalisation, une barrette nasale 14 est fixée au masque 10, plus particulièrement au niveau de la zone secondaire 34, de manière à s'étendre transversalement sur le nez d'un porteur du masque.

Le procédé de fabrication comprend, en outre ici, une étape de stabilisation dimensionnelle.

Cette étape comprend, par exemple, une opération de lavage industrielle.

Pendant l'opération de lavage, le rapport de bain est égal à 1/10, c'est-à-dire que dix litres d'eau sont utilisés pour un kilogramme de matière à laver.

L'opération de lavage comprend au moins un premier cycle de lavage d'une durée supérieure ou égale à 30 minutes et à une température comprise entre 60°C et 95°C, plus particulièrement égale à 90°C, le premier cycle de lavage comprenant l'utilisation d'un détergent.

Le détergent est, par exemple, un détergent non ionique, tel que l'Ultravon ^{®} ROS, commercialisé par la Société Huntsman.

La concentration du détergent dans l'eau est, par exemple, supérieure ou égale à un millilitre par litre d'eau.

L'utilisation de détergent permet notamment de retirer des produits qui auraient été susceptibles de se déposer sur les fils pendant le filage du fil et/ou le tricotage.

Dans un mode de réalisation, l'opération de lavage comprend une pluralité de cycles, les cycles présentant des températures de lavage décroissantes.

Par exemple, l'opération de lavage comprend, dans cet ordre :
- le premier cycle de lavage,
- un deuxième cycle de lavage d'une durée supérieure ou égale à 10 minutes et à une température comprise entre 70°C et 80°C,
- un troisième cycle de lavage d'une durée supérieure ou égale à 10 minutes et à une température comprise entre 55°C et 65°C,
- un quatrième cycle de lavage d'une durée supérieure ou égale à 5 minutes et à une température comprise entre 40°C et 50°C, et
- un cinquième cycle de lavage d'une durée supérieure ou égale à 5 minutes et à une température comprise entre 30°C et 40°C.

Alternativement, l'étape de stabilisation dimensionnelle comprend une opération de teinture des masques.

Après l'étape de stabilisation dimensionnelle, le masque est, par exemple, séché dans un tambour rotatif à une température comprise entre 75°C et 85°C.

L'opération de stabilisation permet notamment de stabiliser le masque dimensionnellement, c'est-à-dire que le masque ne se déforme pas par la suite, notamment en cas de lavage. Cela permet notamment que le masque conserve alors les mêmes capacités de filtration et la même résistance respiratoire.

Dans le cas d'un masque tel que décrit précédemment et stabilisé dimensionnement, les valeurs suivantes ont été mesurées :
- perméabilité à l'air pour une dépression de 100 pascals : 130 litres par mètre carré par seconde, et
- rétention des projections pour des particules ayant une taille de 3 µm : 96,7 %.

Ces valeurs ont été mesurées selon le protocole correspondant décrit dans le guide d'exigences minimales, de méthodes d'essais, de confection et d'usage pour les masques barrières par AFNOR sous la référence AFNOR SPEC S76-001, version 1.10 du 27 avril 2020.

Les valeurs de rétention des projections ont été mesurées pour un flux de l'intérieur vers l'extérieur, c'est-à-dire correspondant à un flux d'un porteur vers son environnement extérieur.

Ces valeurs sont conformes aux valeurs attendues, notamment quant à la perméabilité à l'air pour une dépression de 100 pascals et à la rétention des projections pour des particules ayant une taille de 3 µm, pour des masques de type « barrière ».

Ainsi, la zone filtrante formé d'une couche dudit tissu offre un niveau de filtration conforme aux valeurs attendues pour des masques de type « barrière ».

On considère un cycle d'entretien comprenant un lavage à une température de 60°C pendant un cycle de lavage de 60 minutes, un séchage en séchoir mécanique à 70°C pendant un cycle de séchage de 60 minutes et un repassage avec vapeur.

Après 15 cycles d'entretien, les valeurs suivantes ont été mesurées pour un masque tel que précédemment :
- perméabilité à l'air pour une dépression de 100 pascals : 125 litres par mètre carré par seconde, et
- rétention des projections pour des particules ayant une taille de 3 µm : 99 %.

Après 30 cycles d'entretien, les valeurs suivantes ont été mesurées pour un masque tel que précédemment :
- perméabilité à l'air pour une dépression de 100 pascals : 131 litres par mètre carré par seconde, et
- rétention des projections pour des particules ayant une taille de 3 µm : 99 %.

Le tissu maintient donc des niveaux de perméabilité à l'air et de rétention des projections satisfaisants. Le masque est lavable au moins 30 fois à 60°C. La température de 60°C permet notamment d'éliminer le virus à l'origine de la pathologie Covid-19. Le masque est donc réutilisable.

On obtient, en outre, avec un unique tricot tubulaire, des performances de filtration comparables voire supérieures que des textiles comprenant plusieurs couches de tissu, tout en offrant une résistance inspiratoire inférieure.

## Revendications

1. Masque (10) comprenant un corps principal (12), le corps principal (12) comprenant deux parties d'extrémité (16, 18) et une portion centrale (20), la portion centrale (20) s'étendant entre les parties d'extrémité (16, 18) selon une direction axiale, la portion centrale (20) comprenant une zone filtrante (32) adaptée pour couvrir la bouche et les narines d'un utilisateur,
**caractérisé en ce que** le corps principal (12) est un tricot et présente une forme tubulaire selon la direction axiale et s'étendant entre deux extrémités (22, 24) selon la direction axiale, chaque partie d'extrémité (16, 18) définissant une extrémité (22, 24) respective de la forme tubulaire, chaque partie d'extrémité (16, 18) présentant une fente (26) s'étendant sur une portion d'une circonférence de la forme tubulaire, chaque partie d'extrémité (16, 18) définissant une bride (28, 30) entre l'extrémité (22, 24) et la fente (26) correspondantes, chaque bride (28, 30) étant adaptée pour entourer une oreille correspondante de l'utilisateur, et
**en ce que** le tricot dans la zone filtrante (32) est un tricot d'au moins un fil multifilamentaire synthétique en rangs, chaque fil multifilamentaire synthétique comprenant au moins sept filaments dans la zone filtrante (32), le tricot dans la zone filtrante (32) présentant une longueur de fil absorbée inférieure ou égale à 0,35 centimètre par aiguille, l'au moins un fil multifilamentaire synthétique formant, pour chaque rang, une maille au moins une colonne sur deux dans la zone filtrante (32).

2. Masque selon la revendication 1, dans lequel, dans la zone filtrante (32), pour chaque colonne d'un rang dans lequel aucun fil multifilamentaire synthétique ne forme de maille, alors au moins un de l'au moins un fil multifilamentaire synthétique forme une maille sur les colonnes adjacentes dans le rang.

3. Masque selon la revendication 1 ou 2, dans lequel la zone filtrante (32) est adaptée pour former deux épaisseurs devant la bouche et les narines de l'utilisateur lorsque chaque bride (28, 30) entoure l'oreille correspondante d'un utilisateur.

4. Masque selon l'une quelconque des revendications 1 à 3, dans lequel la fente (26) de chaque partie d'extrémité (16, 18) s'étend sur une moitié de la circonférence de la forme tubulaire.

5. Masque selon l'une quelconque des revendications 1 à 4, dans lequel les fentes (26) des parties d'extrémité (16, 18) sont symétriques l'une par rapport à l'autre par rapport à un plan médian (P) du corps principal (12).

6. Masque selon l'une quelconque des revendications 1 à 5, dans lequel chacune des fentes (26) est réalisée pendant le tricotage du corps principal (12), plus particulièrement par mise en attente d'aiguilles correspondantes.

7. Masque selon l'une quelconque des revendications 1 à 6, dans lequel la zone filtrante (32) présente un motif de structure de tricot (Z5-1) sur l'ensemble de la zone filtrante (32), le motif de structure étant un des motifs suivants :
- en 1&1 alterné ou micro 1&1 alterné,
- un motif dans lequel un même rang donné est répété, ledit rang donné consistant en une alternance de maille et de charge, et
- un jersey uni.

8. Masque selon l'une quelconque des revendications 1 à 7, comprenant une barrette nasale (14) agencée dans la portion centrale (20) du corps principal (12).

9. Masque selon l'une quelconque des revendications 1 à 8, dans lequel le masque (10) est constitué du corps principal (12) ou est constitué du corps principal (12) et une barrette nasale (14).

10. Procédé de fabrication d'un masque (10) selon l'une quelconque des revendications 1 à 9, comprenant une étape de tricotage du corps principal (12) directement en forme, le corps principal (12) présentant une forme tubulaire, une fente (26) étant formée pendant l'étape de tricotage dans chaque partie d'extrémité (16, 18) de sorte que chaque partie d'extrémité (16, 18) définit une bride (28, 30) entre l'extrémité (22, 24) et la fente (26) correspondantes, chaque bride (28, 30) étant adaptée pour entourer une oreille correspondante de l'utilisateur, le tricot dans la zone filtrante (32) étant un tricot d'au moins un fil multifilamentaire synthétique en rangs, chaque fil multifilamentaire synthétique de la zone filtrante (32) comprenant au moins sept filaments, le tricot dans la zone filtrante (32) présentant une longueur de fil absorbée inférieure ou égale à 0,35 centimètre par aiguille, l'au moins un fil multifilamentaire synthétique formant, sur chaque rang, une maille au moins une colonne sur deux dans la zone filtrante (32).

## Patentansprüche

1. Maske (10) mit einem Hauptkörper (12), wobei der Hauptkörper (12) zwei Endabschnitte (16, 18) und einen Mittelabschnitt (20) aufweist, wobei sich der Mittelabschnitt (20) zwischen den Endabschnitten (16, 18) in einer axialen Richtung erstreckt, wobei der Mittelabschnitt (20) einen Filterbereich (32) aufweist, der dazu geeignet ist, Mund und Nasenlöcher eines Benutzers zu bedecken, der Hauptkörper (12) besteht aus Maschenware, ist röhrenförmig in axialer Richtung und erstreckt sich zwischen zwei Endstücken (22, 24) in axialer Richtung, wobei jeder Endabschnitt (16, 18) ein entsprechendes Ende (22, 24) der röhrenförmigen Form definiert, wobei jeder Endabschnitt (16, 18) einen Schlitz (26) aufweist, der sich über einen Teil eines Umfangs der röhrenförmigen Form erstreckt, wobei jeder Endabschnitt (16, 18) einen Flansch (28, 30) zwischen dem entsprechenden Ende (22, 24) und dem Schlitz (26) definiert, wobei jeder Flansch (28, 30) so beschaffen ist, dass er ein entsprechendes Ohr des Benutzers umschließt, und
dass die Maschenware im Filterbereich (32) aus mindestens einem synthetischen Multifilamentgarn in Reihen ist, wobei jedes synthetische Multifilamentgarn mindestens sieben Filamente in der Filterzone (32) umfasst, wobei die Maschenware im Filterbereich (32) eine aufgenommene Fadenlänge von kleiner oder gleich 0,35 Zentimeter pro Nadel aufweist, wobei das mindestens eine synthetische Multifilamentgarn für jede Reihe eine Masche in mindestens jeder zweiten Spalte im Filterbereich (32) bildet.

2. Maske nach Anspruch 1, wobei im Filterbereich (32) für jede Spalte einer Reihe, in der kein synthetisches Multifilamentgarn eine Masche bildet, dann mindestens eines des mindestens einen synthetischen Multifilamentgarns eine Masche über die benachbarten Spalten in der Reihe bildet.

3. Maske nach Anspruch 1 oder 2, wobei der Filterbereich (32) so beschaffen ist, dass er zwei Lagen vor dem Mund und den Nasenlöchern des Benutzers bildet, wenn jeder Riemen (28, 30) das entsprechende Ohr eines Benutzers umschließt.

4. Maske nach einem der Ansprüche 1 bis 3, wobei sich der Schlitz (26) jedes Endabschnitts (16, 18) über eine Hälfte des Umfangs der röhrenförmigen Form erstreckt.

5. Maske nach einem der Ansprüche 1 bis 4, wobei die Schlitze (26) der Endabschnitte (16, 18) in Bezug auf eine Mittelebene (P) des Hauptkörpers (12) symmetrisch zueinander sind.

6. Maske nach einem der Ansprüche 1 bis 5, wobei jeder der Schlitze (26) während des Strickens des Hauptkörpers (12) hergestellt wird, insbesondere durch Bereitstellen entsprechender Nadeln.

7. Maske nach einem der Ansprüche 1 bis 6, wobei der Filterbereich (32) über den gesamten Filterbereich (32) ein Strukturmuster aus Maschenware (Z5-1) aufweist, wobei das Strukturmuster eines der folgenden Muster ist:
- in 1&1 abwechselnd oder Mikro 1&1 abwechselnd,
- ein Muster, in dem ein und dieselbe gegebene Reihe wiederholt wird, wobei die gegebene Reihe aus abwechselnden Maschen und Füllstoffen besteht, und
- einem einfarbigen Jersey.

8. Maske nach einem der Ansprüche 1 bis 7, mit einem Nasensteg (14), der im mittleren Abschnitt (20) des Hauptkörpers (12) angeordnet ist.

9. Maske nach einem der Ansprüche 1 bis 8, wobei die Maske (10) aus dem Hauptkörper (12) besteht oder aus dem Hauptkörper (12) und einem Nasensteg (14).

10. Verfahren zur Herstellung einer Maske (10) nach einem der Ansprüche 1 bis 9, umfassend einen Schritt des Strickens des Hauptkörpers (12) direkt in Form, wobei der Hauptkörper (12) eine röhrenförmige Form aufweist, wobei während des Strickschritts in jedem Endabschnitt (16, 18) ein Schlitz (26) gebildet wird, so dass jeder Endabschnitt (16, 18) einen Flansch (28, 30) zwischen dem entsprechenden Ende (22, 24) und dem Schlitz (26) definiert, wobei jeder Flansch (28, 30) so beschaffen ist, dass er ein entsprechendes Ohr des Benutzers umschließt. Die Maschenware in dem Filterbereich (32) ist eine Maschenware aus mindestens einem synthetischen Multifilamentgarn in Reihen, wobei jedes synthetische Multifilamentgarn in dem Filterbereich (32) mindestens sieben Filamente umfasst, wobei die Maschenware in dem Filterbereich (32) eine aufgenommene Fadenlänge von kleiner oder gleich 0,35 Zentimeter pro Nadel aufweist, wobei das mindestens eine synthetische Multifilamentgarn für jede Reihe eine Masche in mindestens jeder zweiten Spalte im Filterbereich (32) bildet.

## Claims

1. A mask (10) comprising a main body (12), the main body (12) comprising two end parts (16, 18) and a central portion (20), the central portion (20) extending between the end parts (16, 18) in an axial direction, the central portion (20) comprising a filtering zone (32) adapted to cover the mouth and nostrils of a user, **characterised in that** the main body (12) is a knitted fabric and has a tubular shape in the axial direction and extending between two ends (22, 24) in the axial direction, each end portion (16, 18) defining a respective end (22, 24) of the tubular shape, each end portion (16, 18) having a slit (26) extending over a portion of a circumference of the tubular shape of the tubular form, each end portion (16, 18) defining a flange (28, 30) between the corresponding end (22, 24) and slot (26), each flange (28, 30) being adapted to surround a corresponding ear of the user, and
**in that** the knitted fabric in the filtering zone (32) is a knitted fabric of at least one synthetic multifilament yarn in rows, each synthetic multifilament yarn comprising at least seven filaments in the filtering zone (32), the knitted fabric in the filtering zone (32) having an absorbed yarn length of less than or equal to 0.35 centimetres per needle, the at least one synthetic multifilament yarn forming, for each row, a stitch at least every second wale in the filtering zone (32).

2. A mask according to claim 1, wherein, in the filtering zone (32), for each column of a row in which no synthetic multifilament yarn forms a mesh, then at least one of the at least one synthetic multifilament yarn forms a mesh on adjacent columns in the row.

3. A mask according to claim 1 or 2, wherein the filtering zone (32) is adapted to form two layers in front of the user's mouth and nostrils when each strap (28, 30) surrounds the corresponding ear of a user.

4. A mask according to any one of claims 1 to 3, wherein the slot (26) in each end portion (16, 18) extends around half the circumference of the tubular shape.

5. A mask according to any one of claims 1 to 4, in which the ribs (26) of the end parts (16, 18) are symmetrical to each other with respect to a median plane (P) of the main body (12).

6. A mask according to any one of claims 1 to 5, in which each of the slots (26) is made during knitting of the main body (12), more particularly by waiting for corresponding needles.

7. A mask according to any one of claims 1 to 6, wherein the filter zone (32) has a knit structure pattern (Z5-1) throughout the filter zone (32), the structure pattern being one of the following:
- 1&1 alternating or micro 1&1 alternating,
- a pattern in which the same given row is repeated, said given row consisting of an alternating mesh and filler, and
- a plain jersey.

8. A mask according to any one of claims 1 to 7, comprising a nose bridge (14) arranged in the central portion (20) of the main body (12).

9. A mask according to any one of claims 1 to 8, wherein the mask (10) consists of the main body (12) or consists of the main body (12) and a nose bridge (14).

10. A method of manufacturing a mask (10) according to any one of claims 1 to 9, comprising a step of knitting the main body (12) directly into shape, the main body (12) having a tubular shape, a slit (26) being formed during the knitting step in each end portion (16, 18) so that each end portion (16, 18) defines a flange (28, 30) between the corresponding end (22, 24) and slot (26), each flange (28, 30) being adapted to surround a corresponding ear of the user, the knit in the filtering zone (32) being a knit of at least one synthetic multifilament yarn in rows, each synthetic multifilament yarn of the filtering zone (32) comprising at least seven filaments, the knit in the filtering zone (32) having a length of yarn absorbed less than or equal to 0.35 centimetres per needle, the at least one synthetic multifilament yarn forming, on each row, a stitch at least every second wale in the filtering zone (32).
